# EUROPÄISCHE PATENTSCHRIFT

(11) **EP 1 744 942 B1**
(45) Veröffentlichungstag und Bekanntmachung des Hinweises auf die Patenterteilung: **18.06.2008**
(21) Anmeldenummer: 05740162.2
(22) Anmeldetag: 25.04.2005
(51) Int. Cl.: B60T 17/22

(54) **VERFAHREN ZUM ENTLÜFTEN EINER ELEKTRONISCHEN FAHRZEUGBREMSANLAGE**
METHOD FOR BLEEDING AN ELECTRONIC VEHICLE BRAKING SYSTEM
PROCEDE POUR PURGER L'AIR D'UN SYSTEME DE FREINAGE ELECTRONIQUE DE VEHICULE

(30) Priorität: 29.04.2004 DE 102004021274; 17.06.2004 DE 102004029113; 26.02.2005 DE 102005008851
(43) Veröffentlichungstag der Anmeldung: 24.01.2007
(73) Patentinhaber: Continental Teves AG & Co. oHG, 60488 Frankfurt (DE)
(72) Erfinder: BÄCHLE, Martin, 61479 Glashütten 1 (DE); WAGNER, Axel, 36381 Schlüchtern (DE); HITZEL, Michael, 63322 Rödermark (DE); ULLRICH, Thorsten, 64579 Gernsheim (DE); LERCHENBERGER, Jens, 38690 Vienenburg (DE)
(86) Internationale Anmeldenummer: PCT/EP2005/051846
(87) Internationale Veröffentlichungsnummer: WO 2005/105534

(56) Entgegenhaltungen:
- EP-A- 0 323 889
- DE-A1- 3 806 840
- DE-A1- 3 935 353
- DE-A1- 10 103 229

## Beschreibung

Elektronische Bremsanlagen für Kraftfahrzeuge zur Bereitstellung von Funktionen wie ABS, ESP oder ähnlichem basieren auf einer mechatronischen Einheit und umfassen ein elektronisches Steuergerät (ECU) mit einem elektronischen Regler, welcher mit einem elektronischen Fahrzeugbussystem verbunden ist. Die mechatronische Einheit umfasst weiterhin einen Aufnahmekörper für hydraulische Bauelemente (HCU), mit elektrohydraulischen Ventilen und mit einer Rückförderpumpe. An dem Aufnahmekörper sind weiterhin hydraulische Leitungen für Radbremsen und hydraulische Anschlussleitungen für einen Hauptbremszylinder anschließbar.

Bei derartigen elektronischen Bremssystemen ist ein Sekundär-Fluidkreis normalerweise vollständig getrennt von einem Primär-Hydraulikkreis vorgesehen, welcher den Hauptbremszylinder in herkömmlicher Weise mit den Radbremsen verbindet. Diese Trennung verursacht Schwierigkeiten bei Wartungsarbeiten oder bei einer Neuinstallation eines Bremssystems, weil Lufteinschlüsse in Sekundär-Fluidkreisen nicht ohne weiteres mit Hilfe der Entlüftungseinrichtungen der Primär-Hydraulikkreise entfernt werden können. Lufteinschlüsse, mit anderen Worten unnötige Kompressiblitäten, sind in einem Bremssystem prinzipiell nicht tolerierbar.

In der Fahrzeugproduktion wir vielfach eine sogenannte Bandende- oder Vakuumbefüllung durchgeführt. Mit anderen Worten werden die hydraulischen Komponenten einer Fahrzeugbremsanlage hydraulikfluidfrei - also trocken - im Fahrzeug montiert, um am Montagebandende eine sogenannte Vakuumbefüllung mit dem vorgesehenen Hydraulikfluid durchzuführen. In einem ersten Prozessschritt wird die im Bremssystem befindliche Luft abgesaugt (Vakuumphase), in einem zweiten Schritt wird beispielsweise Bremsflüssigkeit unter Überdruck eingefüllt (Füllphase) und in einem dritten Schritt wird zuviel eingefülltes Flüssigkeitsvolumen abgesaugt (Nivellierphase). Das Befüllen und Entlüften von den Sekundär-Fluidkreisen - welche sich im wesentlichen zwischen stromlos geschlossenen Elektromagnetventilen (Auslassventilen) und Pumpensaugventilen befinden - stellt eine schwierige Aufgabe dar. Zu diesem Zweck ist es erforderlich, in den einzelnen Entlüftungs- und Befüllphasen Ventile bzw. die Rückförderpumpe des Bremssystems definiert sowie synchronisiert zu schalten.

Aus der DE 38 06 840 C2 geht ein Verfahren zur Befüllung einer Hydraulikeinheit eines Antiblockierregelsystems hervor. Zur Entfernung von Lufteinschlüssen in dem Bremssystem wird ein Entlüftungscomputer mit einer Stromversorgungseinheit, mit einer Bedieneinheit und mit einer Anzeigeeinheit vorgeschlagen. Der gesonderte Entlüftungscomputer enthält einen Mikroprozessor, welcher ein besonderes Steuerprogramm zur Luftentfernung aufweist. Um das Antiblockierregelsystem zwecks Luftentfernung anzusteuern, wird ein Stecker des fahrzeugseitigen Kabelbaumes von dem elektronischen Regler des Antiblockierregelsystemes abgezogen. Der elektronische Regler wird dann gesondert an den Entlüftungscomputer angeschlossen. Dadurch können Entlüftungssequenzen durchgeführt werden, in deren Verlauf die Rückförderpumpe wie auch elektrohydraulische Ventile angesteuert werden, um Lufteinschlüsse in Sekundär-Fluidkreisen der Hydraulikeinheit mit Hilfe von Entlüftungseinrichtungen von Primär-Fluidkreisen (mit anderen Worten mittels Entlüfterschrauben an Radbremsen) zu entfernen.

Aus der EP 0 323 889 A1 ist ein Antischleuder-Bremssystem mit einer Antischleuder-Betriebsart und mit einer Entlüftungs-Betriebsart bekannt geworden. Um in die Entlüftungs-Betriebsart zu gelangen, wird das System - wie in der DE 38 06 840 C2 - über eine Diagnoseschnittstelle und einen Entlüftungsstecker mit einer Diagnoseschaltung verbunden, um entsprechende Auslösedaten zu erhalten. Wenn keine korrekte Verbindung an der Diagnoseschnittstelle vorliegt, beginnt ein normaler Antischleuder-Betriebszyklus. Das Bremssystem verfügt weiterhin über Einrichtungen zum Aufheben der Entlüftungs-Betriebsart, wenn Eingangssignale von Raddrehsensoren am elektronischen Steuergerät (ECU) anzeigen, dass das Fahrzeug in Bewegung ist.

DE 3 935 353 A1 zeigt ein automatisiertes Entlüftungsverfahren unter Nutzung eines Bordeigenen Wegsensors wobei in den Entlüftungsmodus geschaltet wird, wenn ein Pedalweg von mehr als 90% des Gesamthubs sensiert wird.

Die bekannten Verfahren zum Befüllen einer Fahrzeugbremsanlage beruhen folglich darauf, dass jeweils ein gesondert angeschlossener Prozessrechner vorgesehen ist, um einen Entlüftungs- oder Befüllmodus eines Antiblockierregelsystemes zu ermöglichen. In dem Entlüftungs- oder Befüllmodus steuert der Prozessrechner den elektronischen Regler des Antiblockierregelsystems an und gibt weiterhin einen Druckzeitverlauf für die Steuerung der Befüllanlage vor. Zwischen Prozessrechner und elektronischem Regler des Bremssystems ist jeweils eine elektrische Verbindung erforderlich.

Die Erfindung beruht auf der Aufgabe, eine verbesserte, komfortablere und abgesicherte Durchführung von Befüll- und Entlüftungsprozessen zu ermöglichen. Ferner wird eine größere Zuverlässigkeit bei der Durchführung der genannten Prozesse angestrebt.

Die Aufgabe wird durch das Verfahren des Anspruchs 1 und durch den elektronischen Regler der Ansprüches 21 un 22 gelöst.

Die Aufgabe wird im wesentlichen gelöst, indem mit Hilfe von bordsensorischen Mitteln ein von außen aufgeprägter Druckzeitverlauf (Füllprofil) während eines Füll- oder Entlüftungsprozesses erkannt wird, und dass die elektrohydraulischen Komponenten des Bremssystems von dem elektronischen Regler entsprechend dem erkannten Füllprofil nach Bedarf angesteuert werden. Die Erfindung basiert folglich im Wesentlichen darauf, dass die bordsensorischen Mittel eine Zusatzfunktion während Entlüftungs- oder Befüllzyklen aufweisen, und dass die gewonnenen Signale und Daten in dem elektronischen Regler des Bremssystems zur Ansteuerung ausgewertet werden. Es ist möglich, aber nicht zwingend erforderlich, die gewonnen Prozessdaten an einen Prozessrechner zu kommunizieren.

Weiterhin ist ein Programmcode für die Abarbeitung der Einwahlroutine in dem Speicher des Reglers abgelegt, und die Einwahlroutine mit Hilfe eines vorbestimmten Codes abgesichert. Dadurch werden Missbrauchstatbestände wie auch eine Instandsetzung durch nicht autorisierte Personen vermieden.

Für die bedarfgerechte Ansteuerung werden insbesondere Druckschwellen des ermittelten Füllprofils herangezogen. Die Erfindung ermöglicht eine autonome Entlüftung ohne die Notwendigkeit einer Ansteuerung des Antiblockierregelsystems durch einen gesonderten Prozessrechner, weil der Programmcode zur Ansteuerung der elektrohydraulischen Komponenten gewissermaßen "on bord" vorgesehen ist. Weil weiterhin bordeigene Mittel der Drucksensorik für die Erkennung von Druckschwellen eingesetzt werden, kann der Entlüftungszustand der Bremsanlage gewissermaßen in-situ erfasst werden. Dies ermöglicht eine verbesserte Qualitätssicherung mit zeitnaher, weitgehend automatisierter, Nacharbeit beim laufenden Entlüftungsprozess.

Das erfindungsgemäße Verfahren verhilft zu dem Vorteil, dass ein Prozessrechner eines Befüll- und Entlüftungsgerätes prinzipiell von der Bremsanlage entbunden ist. Es ist weiterhin vorteilhaft, dass keine Kabelverbindung zwischen Fahrzeug bzw. Steuergerät (ECU) und Prozessrechner (Füllautomat) vorhanden sein muss. Zu diesem Zweck waren bisher - je nach Kraftfahrzeughersteller - zum Teil sogar mehrere gesonderte Abzweige am Kabelstrang des Fahrzeuges erforderlich. Diese können folglich eingespart werden.

Um einen einfachen Austausch defekter Bremsaggregate auch ohne Prozessrechner zu ermöglichen, wurden bisher sogenannte vorgefüllte Bremsaggregate ausgeliefert, die keine Entlüftung der Sekundärkreise erforderten. Im Unterschied dazu sollen künftig ausschließlich ungefüllte Bremsaggregate ausgeliefert werden, wobei die notwendige Hardware und Software zum Entlüften und Befüllen des elektrohydraulischen Bremsaggregates erfindungsgemäß permanent on board mitgeführt wird. Dadurch wird einem autorisierten Fahrzeugmechaniker eine einfache Möglichkeit zum Entlüften und Befüllen eines völlig trocken ausgelieferten Bremsaggregates ermöglicht. Folglich entfällt ein zwingender Grund für eine Vorbefüllung der Bremsaggregate im Werk des Bremsenherstellers. Die generelle Notwendigkeit von Prozessrechnern sowie Kommunikationsfehler und gestörte Kabelverbindungen zwischen Prozessrechner und dem elektronischen Regler werden eliminiert.

Gemäß einer vorteilhaften Weiterbildung ist ein on-board-Entlüftungsverfahren für elektrohydraulische Aggregate für schlupfgeregelte Bremssysteme vorgesehen, wobei befüll- und entlüftungsrelevante Daten und Informationen wie insbesondere der offizielle Befüllstatus des Aggregates, und Informationen über erfolgreich abgeschlossene und / oder erfolglos abgebrochene Entlüftungsroutinen des Aggregates - ohne Zugriff auf ein externes Diagnose- oder Steuergerät - in einem Speicher des Reglers abgelegt werden. Dadurch wird eine robuste Entlüftungsroutine ermöglicht, welche auch komfortabel durchführbar ist. Denn die Daten, Codes und Routinen zur Durchführung der Entlüftungsroutine sind in einen Speicher eines Reglers des hydraulischen Aggregates vorgesehen, und werden gewissermaßen mit dem Aggregat geliefert. Eine Diagnoseanbindung zu einem externen Steuergerät ist obsolet. Der Aufwand und die Kosten bei Fahrzeugherstellern wie auch in Werkstätten wird abgesenkt, weil das Diagnosegerät entfallen kann. Werkstätten die ein Diagnosegerät nicht zur Verfügung stellen können, werden in den Stand versetzt, eine Entlüftungsroutine durchzuführen. Dadurch wird die Akzeptanz elektrohydraulischer Bremssysteme verbessert.

Gemäß weiterer Ausgestaltung ist vorgesehen, dass der Speicher des Reglers einen Programmcode für eine Entlüftungsroutine aufweist, und dass eine erfolgreich abgeschlossene Einwahlroutine eine Voraussetzung für die Abarbeitung der Entlüftungsroutine ist. Der Programmcode ist folglich ein fester Bestandteil des Aggregates, und der Start einer Entlüftungsroutine erfolgt nach einem vorgegebenen Schema.

Ein praktikabler Prozess zur Durchführung der Einwahlroutine sieht vor, dass der vorbestimmte Code in dem Speicher des Reglers abgelegt ist, dass die Einwahlroutine eine Identifizierung durch Eingabe eines Codes umfasst, und wobei der Regler eine Übereinstimmung oder Diskrepanz zwischen dem eingegebenen und dem abgelegten Code feststellt, so dass die Entlüftungsroutine ausschließlich bei Codeübereinstimmung freigegeben wird. Der Code kann mittels einem vorbestimmten Betätigungsschema wie insbesondere Betätigungsanzahl, Betätigungsfrequenz, oder Betätigungsgeschwindigkeit von Mensch-Maschine-Schnittstellen des Kraftfahrzeuges eingegeben werden. Dabei handelt es sich beispielsweise um zwangsläufig erforderliche Mensch-Maschine-Schnittstellen, wie insbesondere Taster, Schalter, Hebel oder Sensoren zur Betätigung von Fahrzeugkomponenten vorgesehen sind, und neben dieser Hauptbetätigungsfunktion noch die Doppelfunktion zur Eingabe des Codes aufweisen. Prinzipiell ist die Einbindung aller Mensch-Maschine-Schnittstellen eines Kraftfahrzeuges denkbar. Unter Berücksichtigung praktischer Erwägungen handelt es sich jedoch insbesondere um die Pedalerie, sowie Schalter- und Hebelstellungen von Getriebe, Zündung, Fensterheber, Blinker, und ähnlichem. Eine Ziffern- und Zeichenkodifikation ist möglich. Darüber hinaus ist die zusätzliche oder isolierte Verwendung einer bestimmten Hardwarecodifikation mittels einen besonderen (Werkstatt-)Schlüssel, eine besondere Chipkarte oder ähnlichem mehr denkbar.

Zu Nachweiszwecken dient die nachfolgende Verbesserung wonach der Verlauf und / oder das Ergebnis der Einwahlroutine vorzugsweise zusammen mit einer internen Systemzeit in dem Speicher des Reglers abgelegt ist. Es ist weiterhin sinnvoll, wenn die Daten über den Verlauf und das Ergebnis der Entlüftungsroutine unter Protokollierung von erfolgreich oder erfolglos abgeschlossenen Verfahrensschritten in dem Speicher des Reglers abgelegt werden. Durch diese Maßnahmen sind beispielsweise Missbrauchstatbestände nachweisbar.

Ganz generell ist vorgesehen, dass die Entlüftungsroutine in mehrere, zeitlich aufeinander folgende Schritte S1-Sn zerlegt ist, wobei zur Abarbeitung der einzelnen Schritte S1-Sn definierte Systemzustände (B,S, P, F, D, ID) vorgesehen sind, und wobei jeder Schritt (S1-Sn) je eine Interaktionsstufe (I) - insbesondere zur bedienergeführten Auswahl, Dateneingabe oder sonstiger Tätigkeit - und je eine Aktivitätsstufe (A) zur Abarbeitung von internen Prozessen aufweist. Dabei unterscheidet die Entlüftungsroutine die Systemzustände B = aktiv (busy), S = gestoppt, P = pause, F = fehler, D = done (fertig) und ID = Idle. Die Systemzustände (B, S, P, F, D, ID) werden in dem Speicher protokolliert.

Der Werker (Bediener) ist primär zur Überwachung des Prozesses vorgesehen und wird aufgefordert, jede Interaktionsstufe (I) mittels Bestätigung (Befehl: continue) zu quittieren, um nach Bestätigung automatisch in die Aktivitätsstufe (A) zu wechseln. Wenn der Bediener nicht bestätigt, ist die Entlüftungsroutine während jedem Schritt innerhalb der Interaktionsstufe (I) durch Abbruch (Kommando: abort) in den gestoppten Systemzustand S (gestoppt) überführbar. Dadurch erhält der Bediener - trotz hochgradiger Prozessautomatisierung - eine volle Kontrolle über den Prozess.

Für die Entlüftungsroutine ist ein Monitor vorgesehen. Dieser Monitor sorgt dafür, dass eine automatische Überwachungsroutine während der Entlüftungsroutine aktiv ist, die zur Fehlerüberwachung dient, und dass in einem Fehlerfall automatisch in den Systemzustand F (Fehler) gewechselt wird. In Abhängigkeit von der Fehlerschwere wird ein vollständiger Abbruch (Abort) der gesamten Entlüftungsroutine oder nur ein Abbruch des aktuelle durchgeführten Schrittes (S) der Entlüftungsroutine in Verbindung mit der Rückführung zu der letzten Interaktionsstufe (I) vorgeschlagen. Jeder Abbruch ist zu bestätigen.

Des weiteren wir eine Vorrichtung zur Durchführung des erfindungsgemäßen Verfahrens nach der zweiten Lösung vorgeschlagen, wobei der Speicher des Reglers als EEPROM ausgebildet ist.

Für den Fall, dass die vorgeschlagene Routine aus irgendwelchen Gründen nicht zum Einsatz kommen soll, ist vorgesehen, dass der Regler eine Schnittstelle für ein externes Diagnosegerät aufweist, und dass die vorgesehene Einwahlroutine mit Hilfe des externen Diagnosegerätes außer Funktion setzbar ist. Dadurch wird auch dem Wunsch Rechnung getragen, die konventionelle bisherige Technik anwenden zu können.

Die Erfindung wird nachstehend unter Bezugnahme auf zwei schematische Zeichnungen, welche den Verfahrensprozess prinzipiell verdeutlichen, näher beschrieben.

Die Herstellung des elektronischen Bremssystems bei einem Zulieferer des Bremssystems endet mit einem Verfahrensschritt, der es dem elektronischen Regler ermöglicht, eine autonome Füllsequenz durchzuführen.

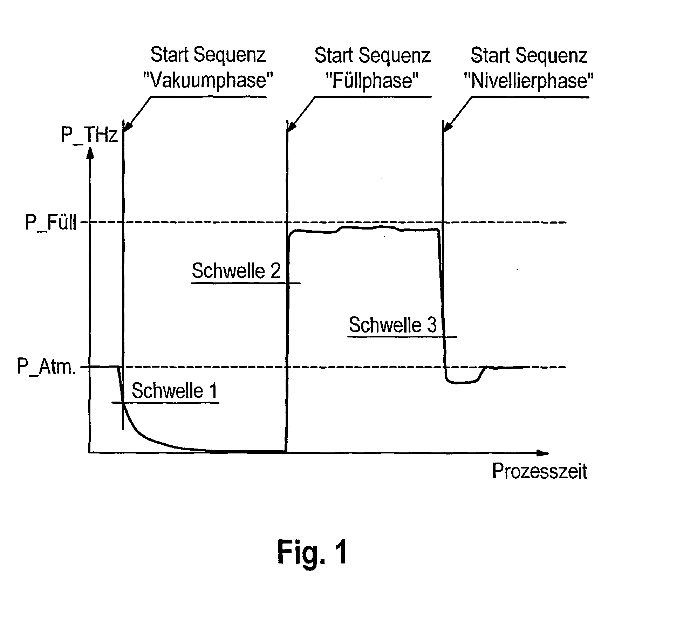

Fig. 1 stellt nun ein Diagramm dar, in dem der am Drucksensor des Tandemhauptzylinder (P_Thz) gemessene Druckverlauf beim Befüllen über die Zeit (Prozesszeit) dargestellt ist. In Abhängigkeit der Druckschwellen 1 bis 3 werden die üblichen Befüllungssequenzen durch das Steuergerät der Bremse aufgerufen.

Bei der Ausführung des Verfahrens nach der Erfindung werden die nachfolgend beschriebenen Sequenzen bevorzugt einzeln oder in Kombination miteinander ausgeführt:
Zur Befüllung einer trockenen Bremsanlage wird beispielsweise ein Zündschloss betätigt, und die Bremsanlage wird mit Strom versorgt. Nachfolgend wird der Befüllungsprozess AFS (autonome Füllsequenz) freigeschaltet, d.h. nach "Zündung ein" erwartet der elektronische Regler der Bremsanlage zumindest den Beginn eines vorgegebenen Druckzeitverlaufes (Füllprofil). Diese erste Sequenz wird auch **Erkennungsphase** genannt. Die Bremsanlage ist prinzipiell unmittelbar vor und während dem Verlauf des Befüllungsprozesses nicht betriebsbereit, d.h. die Betriebssoftware des Bremssystems ist softwareseitig blockiert (Software-Sperre), weil das Bremssystem nicht mit dem Hydraulikfluid gefüllt ist. Der genaue Ablauf einer Befüllsequenz ist wie folgt:
   - Eine Erkennungsphase wird insbesondere durch einen besonderen Zustand der Warnleuchten des Bremssystems, z.B. durch Blinken von Warnleuchten, beispielsweise einer gelben und einer roten Bremsenwarnleuchte angezeigt. Hierdurch ist für einen Werker erkennbar, dass das Bremssystem zur Befüllung zwar aktiviert, aber nicht betriebsbereit geschaltet ist.
   - Nach positiv abgeschlossener Erkennungsphase wird dies vorzugsweise durch eine entsprechende Anzeige (bspw. beschleunigte Blinkfrequenz) quittiert, und es folgt eine sogenannte Vakuumphase, in deren Verlauf in dem Bremssystem Vakuum gesaugt wird.
   - Nach Erkennen einer entsprechenden Druckschwelle (unterschrittene, Druck-Schwelle mit entsprechend abgesenktem Atmosphärendruck im Bremssystem) beginnt die eigentliche Füllsequenz (Füllphase). In deren Verlauf startet der elektronische Regler der Bremsanlage eine Schaltsequenz (im allgemeinen werden dabei die Auslassventile und elektrischen Umschaltventile, wie auch die Rückförderpumpe ggf. wechselweise geschaltet), und das Druckmittel wird vorzugsweise mit Druck in das System eingepresst.
   - Es ist außerdem eine dritte Schwelle vorgesehen, die mit einem entsprechenden Systemdruck einhergeht, und welche der ersten und der zweiten Druckschwelle nachgeordnet ist. Nach Erreichen der dritten Schwelle wird eine Nivellierphase eingeleitet, innerhalb derer das Druckmittel und folglich der Fluidstand im Bremssystem beruhigt wird. Sollte das Bremssystem zu viel Hydraulikfluid aufweisen, wird dieses aus einem Flüssigkeitsbehälter entnommen.
   - Sind die genannten drei Phasen erfolgreich abgeschlossen, so wird dies dem Werker beispielsweise dadurch quittiert, das die Bremsenwarnlampen erlöschen, und die oben angegebene Sperre der Betriebssoftware aufgehoben wird. Nun kann das Kraftfahrzeug im "End-of-Line-Test" eine ABS-Regelung oder auch einen gesteuerten Testzyklus absolvieren.

Wird die Befüllsequenz aus irgendwelchen Gründen negativ beeinflusst, z.B. durch ein Vakuum-Leck, so erkennt dies der elektronische Regler anhand des Druckzeitverlaufes. Es ist bevorzugt vorgesehen, dass der elektronische Regler der Bremsanlage auf derartige Störungen angemessen reagiert. Eine angemessene Reaktion besteht zum Beispiel darin, dass die Zeitdauer der laufenden Phase einfach verlängert wird, oder dass der Regler einfach in einen Fehlermodus mit automatischer oder manueller Nacharbeit umgeschaltet wird. Dies kann dem Werker anhand eines bestimmten Codes (Fehlersignal) angezeigt, und die fehlerbehaftete Bremsanlage kann ggf. in manueller Nacharbeit manuell entlüftet werden. Der Fehlermodus kann zum Beispiel durch besonders blinkende Warnlampen angezeigt werden. In Fehlerfällen kann insbesondere vorgesehen sein, dass die Betriebssoftware des elektronischen Reglers temporär oder auf Dauer gesperrt wird. Am Bandende (im End of Line (EoL)-Test) kann dieses Aggregat dann identifiziert werden. Nach Behebung des Fehlers wird die Sperrung aufgehoben.

Durch Über- oder Unterschreiten bestimmter Druck-Zeitschwellen kann der Befüllprozess abgebrochen, und in einen Fehlermodus übergegangen werden.

Selbstverständlich kann das erfindungsgemäße Verfahren mit mehr als drei Druckerkennungsschwellen durchgeführt werden.

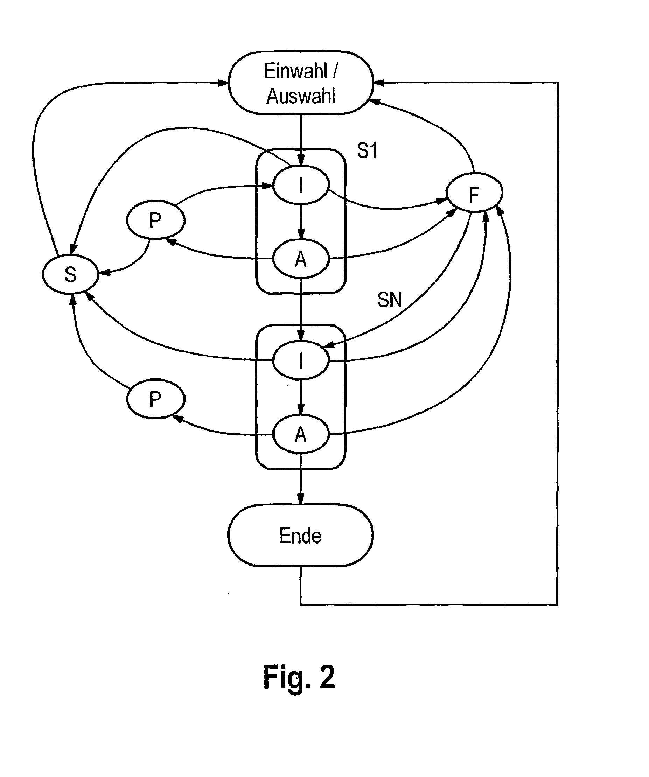

Nachstehend wird der Prozess gemäß Fig. 2 näher erläutert. Der prinzipielle Aufbau der Entlüftungsroutine ist für unterschiedlich konfigurierte Systeme - die unterschiedliche Funktionen (ABS-only, ABS und Traktionskontrolle (ASR) oder ABS und ESP-Funktionalität) enthalten können - prinzipiell gleich strukturiert. Ein wesentliches Kennzeichen der Entlüftungsroutine sind Einwahl und Auswahl- oder Beendigungsszenarien, die besonders robust gegenüber Fehlbedienungen oder zufälligen Bedieneraktionen ausgeführt sind. Denn jede Systemeingabe von Daten oder Vornahme einer Handlung erfordert eine quittierende Bestätigung.

Dem Bediener oder Werker wird gewissermaßen eine integrierte Kommunikation über ohnehin vorgesehene Ausgabemittel (Display(s), Leuchten, Hupe o.ä.) zusammen mit einer integrierten Menüführung zur Verfügung gestellt, um die Entlüftungsroutine zu erledigen. Beispielsweise hat der Werker eine Eingabe zu quittieren, und die Fahrzeugbremsanlage quittiert den korrekten Empfang dieser Eingabe anhand der oben genannten Ausgabemittel unter Nutzung eines bestimmten Codes. Dadurch kann eine Verbindung mit einem gesonderten Steuer- oder Diagnosegerät entfallen.

Die Entlüftungsroutine besteht aus einer Abfolge von mehreren Schritten (Stages) S1, ..., Sn. Innerhalb jedes Schrittes (Stage) gibt es jeweils eine Interaktionsstufe I (Systemzustand w = wartend, auf Eingabe oder Auswahl) sowie jeweils eine Aktivitätsstufe A (Systemzustand B = busy).

Innerhalb der Interaktionsstufe I wird der Bediener/Werker durch eine entsprechende Meldung automatisch über ein Menüsystem zu einer bestimmten Tätigkeit, Eingabe oder ähnlichem, wie beispielsweise das Öffnen einer bestimmten Entlüfterschraube an einem Radbremssattel veranlasst. Die Vornahme der Tätigkeit oder Eingabe wird durch den Werker mittels einem Kommando (beispielsweise "enter, continue") bestätigt.

Nach Bestätigung und erfolgreicher Abarbeitung der jeweiligen Aktivitätsstufe A des Schrittes S erfolgt eine automatische Weiterschaltung zum nächsten Schritt S mit dessen entsprechender Interaktionsstufe I. Nach Ablauf von n-Schritten erfolgt der automatische Übergang in den Systemzustand "D" (done).

In jeder Interaktionsstufe I besteht die Möglichkeit, die gesamte Entlüftungsroutine abzubrechen (beispielsweise mit einem Kommando "abort"). In diesem Fall verzweigt die Ablaufsteuerung in einen verharrenden Systemzustand "S" (gestoppt). Der Prozess pausiert gewissermaßen. Der Systemzustand "S" lässt sich prinzipiell während jeder Aktivität erreichen, indem eine entsprechende Eingabe, beispielsweise durch eine Tasterbetätigung herbeigeführt wird, die den Systemzustand "S" herbeiführt. Die Ablaufsteuerung verzweigt dann in den Systemzustand "P" (pause). Der Systemzustand "P" gleicht einer Interaktionsstufe, d.h. es stehen Weiterführungs- ("continue") und definitive Abbruchkommandos ("abort") zur Verfügung. Das Kommando "continue" führt zur Interaktionsstufe I des zuletzt durchgeführten Schrittes S zurück, während "abort" zum Abbruch der laufenden Entlüftungsroutine führt, und einen Neubeginn ermöglicht.

In dem Regler ist auch ein Monitor vorgesehen, welcher die Entlüftungsroutine automatisch überwacht. Der Monitor überwacht auch, ob die Vorbedingungen für eine erfolgreiche Entlüftungsroutine wie insbesondere ausreichende Fahrzeugbordnetzspannung (Unterspannungsüberwachung), Fahrzeugstillstand, tolerable Umgebungs- und Hydraulikfluidtemperatur und ähnliches mehr gegeben sind, und während dem gesamten Prozess vorliegen. Der Monitor kann auch dazu dienen, das Fahrzeug in Hinblick auf weitere Komponenten wie beispielsweise den Antriebsmotor still zu legen, und diese Stillegung des Fahrzeugs angemessen zu verdeutlichen (Displayanzeige, Warnlampenleuchte, Warnblinkleuchtenbetrieb, Einbindung der Fahrzeughupe, oder ähnliches sowie Kombinationen davon sind denkbar).

Neben der Entlüftungsfunktion ist es denkbar, durch Eingabe besonders codierter Befehle eine Freischaltung oder Abschaltung bestimmter Funktionalitäten wie beispielsweise der ASR oder ESP-Funktion zu ermöglichen. Auf diese Art und Weise ist es denkbar, ein Bremssystem einfach in einer Werkstatt des Fahrzeugherstellers mit den genannten Funktionalitäten nachzurüsten, oder ein Kunde nimmt beispielsweise zeitlich beschränkt für die Wintermonate eine ESP-Funktionalität in Anspruch, die nach der bewilligten Frist automatisch oder manuell deaktiviert wird.

Während einer Einwahlroutine oder einer Aktivitätsstufe A werden System- oder Bedienerfehler durch den Monitor erkannt. Fehlerursache können beispielsweise Fahrzeugbordnetz-Unterspannung, das Setzen von Fehlerbits durch kritische Überwachungsroutinen, das Öffnen einer falschen Entlüfterschraube am Radbremssattel oder ähnliches mehr sein. Dadurch erfolgt ein Übergang in den Zustand "F" (Fehler). Die Fehler werden klassifiziert. Leichte Fehler führen zu einer bedingten Rückführung (Rücksprung zur Interaktionsstufe I des aktuellen Schrittes S). Dagegen führen hochgradige oder fatale Fehler zu einer unbedingten Rückführung, also einem automatischen Abbruch der gesamten Entlüftungsroutine. Alle (System-)Zustände und Auswirkungen werden dem Werker in angemessener Weise kommuniziert. Eine Fehlermeldung muss prinzipiell (beispielsweise mit dem Befehl "continue") bestätigt werden.

Aus dem Systemzustand "S" (stopped), "F" (failed), "D" (done) und anschließender Archivierung dieses Zustands im Speicher des Reglers erfolgt der Übergang in den Systemzustand "ID" (idle). Der Fehlerspeicher ist vorzugsweise als Eeprom ausgebildet.

Mit einem Eintritt in eine Entlüftungsroutine werden sukzessive interne Status-Flags in dem Fehlerspeicher gesetzt. Diese Flags beinhalten die Abspeicherung von Werten und Zuständen der einzelnen Schritte wie auch einen erfolglosen Abbruch der Entlüftungsroutine (Fehlerspeicher).

Prinzipiell ist es denkbar, die Entlüftungsroutine reglerintern redundant zu betreiben, das heißt die notwendigen Vorgänge, Berechungen und ähnliches mehr reglerintern unabhängig voneinander mehrfach abzuarbeiten.

Im Sinne einer Fail-Safe-Lösung zum ermöglichen einer konventionellen Entlüftung ist ferner eine Schnittstelle vorgesehen, um den Regler mit einem externen Diagnosegerät zu verbinden. Dadurch wird einem Kundenwunsch Rechnung getragen, die Entlüftung des Aggregates und des Bremssystems auch ermöglicht wird, falls die geschilderte on-board-routine nicht genutzt werden kann oder nicht genutzt werden soll.

Es versteht sich, dass der Regler mit geeigneter Sensorik (Temperatursensor, Drucksensor(en), Bremslichtschalter/Bremsbetätigungssensor oder ähnlichem wie insbesondere einem Sensor zur Beurteilung der Hydraulikflüssigkeitsqualität (Alterung, Wasseranteil) verbunden ist, um einerseits dem Fahrzeugführer frühzeitig die Notwendigkeit eines Hydraulikflüssigkeitswechsels zu verdeutlichen. Andererseits ist die Sensorik erforderlich, damit die notwendigen Monitor- und Überwachungsfunktion die notwendigen Informationen über den Systemzustand im und am Bremssystem erhält.

## Patentansprüche

1. Verfahren zum Befüllen und Entlüften eines elektronisch regelbaren Bremssystems, umfassend einen elektronischen Regler zum Ansteuern von elektrohydraulischen Komponenten des Bremssystems, wobei hydraulische Komponenten wie Hydraulikeinheit, Ventile, Rückförderpumpe, Hauptbremszylinder, Rohrleitungen oder Schläuche bei der Montage eines Kraftfahrzeuges, zur Bildung eines Bremssystem eingebaut, und mit Druckmittel so befüllbar sind, dass im Wesentlichen eventuell verbliebene Luftblasen im Inneren der hydraulischen Komponenten im Wesentlichen beseitigt werden, wobei das Verfahren Befüllsequenzen nach einem vorgegebenen Füllprofil aufweist, wobei mit Hilfe von bordsensorischen Mitteln zur Erfassung eines Bremssystemdrucks ein aufgeprägter Druckzeitverlauf erkannt wird, und wobei die elektrohydraulischen Komponenten des Bremssystems von dem elektronischen Regler entsprechend dem erkannten Füllprofil nach Bedarf angesteuert werden, und der Zugriff auf das Verfahren zur Vermeidung von Mißbrauchstatbeständen durch eine Einwahlroutine mit Hilfe eines vorbestimmten Codes abgesichert ist.

2. Verfahren nach Anspruch 1, **dadurch gekennzeichnet, dass** das Bremssystem eigenständig, also automatisch, die wesentlichen Schritte des Füllprofils und/oder den Beginn des Befüllens derart selbständig erkennt, dass zur Erkennung des Füllprofils oder zum Vorgeben von bestimmten Einstellungen für die hydraulischen Komponenten keine elektrischen Verbindungsleitungen oder sonstige entsprechende elektrische Schnittstellen zwischen Bremssystem und Füllautomat erforderlich sind.

3. Verfahren nach Anspruch 2, **dadurch gekennzeichnet, dass** die Erkennung des Füllprofils oder des Beginns der Befüllung mittels mindestens einem in der Bremsanlage vorhandenen Drucksensor durchgeführt wird, wobei insbesondere ein Drucksensor im Bereich des Hauptzylinders eingesetzt wird.

4. Verfahren nach Anspruch 1, **dadurch gekennzeichnet, dass** der eigentlichen Betriebsphase des Reglers für den regulären Bremsbetrieb eine Erkennungsphase zur Erkennung eines Füllvorgangs vorgeschaltet ist, welche beim ersten Einschalten des Bremssystems aktiviert ist.

5. Verfahren nach Anspruch 4, **dadurch gekennzeichnet, dass** die Erkennungsphase eine erste Druckerkennungsschwelle überwacht und genau dann, wenn der Druck die erste Druckerkennungsschwelle unterschreitet, die Füllphase beginnt.

6. Verfahren nach Anspruch 5, **gekennzeichnet durch** mindestens zwei, insbesondere drei Druckerkennungsschwellen.

7. Verfahren nach Anspruch 1, **dadurch gekennzeichnet, dass** befüll- und entlüftungsrelevante Daten und Informationen wie insbesondere der offizielle Befüllstatus des Aggregates, und Informationen über erfolgreich abgeschlossene und / oder erfolglos abgebrochene Entlüftungsroutinen des Aggregates - ohne Zugriff auf ein externes Diagnose- oder Steuergerät - in einem Speicher des elektronischen Reglers abgelegt sind.

8. Verfahren nach Anspruch 1, **dadurch gekennzeichnet, dass** ein Programmcode für die Abarbeitung der Einwahlroutine in dem Speicher des elektronischen Reglers abgelegt ist, und dass die Einwahlroutine mit Hilfe eines vorbestimmten Codes abgesichert ist.

9. Verfahren nach Anspruch 1, **dadurch gekennzeichnet, dass** der vorbestimmte Code in dem Speicher des elektronischen Reglers abgelegt ist, dass die Einwahlroutine eine Identifizierung durch Eingabe eines Codes umfasst, und wobei der elektronische Regler eine Übereinstimmung oder Diskrepanz zwischen dem eingegebenen und dem abgelegten Code feststellt, so dass die Entlüftungsroutine ausschließlich bei Codeübereinstimmung freigegeben wird.

10. Verfahren nach Anspruch 8 oder 9, **dadurch gekennzeichnet, dass** der Code mittels einem vorbestimmten Betätigungschema wie insbesondere Betätigungsanzahl, Betätigungsfrequenz, oder Betätigungsgeschwindigkeit von Mensch-Maschine-Schnittstellen des Kraftfahrzeuges eingebbar ist.

11. Verfahren nach Anspruch 10, **dadurch gekennzeichnet, dass** zwangsläufig erforderliche Mensch-Maschine-Schnittstellen, wie insbesondere Taster, Schalter, Hebel oder Sensoren zur Betätigung von Fahrzeugkomponenten neben der Hauptbetätigungsfunktion noch eine Doppelfunktion zur Eingabe des Codes aufweisen.

12. Verfahren nach Anspruch 1 und/oder 7, **dadurch gekennzeichnet, dass** der Verlauf und / oder das Ergebnis der Einwahlroutine in dem Speicher des elektronischen Reglers abgelegt ist.

13. Verfahren nach Anspruch 12, **dadurch gekennzeichnet, dass** Daten über den Verlauf und das Ergebnis der Entlüftungsroutine unter Protokollierung von erfolgreich oder erfolglos abgeschlossenen Verfahrensschritten in dem Speicher des elektronischen Reglers abgelegt werden.

14. Verfahren nach einem oder mehreren der vorhergehenden Ansprüche, **dadurch gekennzeichnet, dass** die Entlüftungsroutine in mehrere, zeitlich aufeinander folgende Schritte S1-Sn zerlegt ist, wobei zur Abarbeitung der einzelnen Schritte S1-Sn definierte Systemzustände (B,S, P, F, D, ID) vorgesehen sind, und wobei jeder Schritt (S1-Sn) je eine Interaktionsstufe (I) - insbesondere zur bedienergeführten Auswahl, Dateneingabe oder sonstiger Tätigkeit - und je eine Aktivitätsstufe (A) zur Abarbeitung von internen Prozessen aufweist.

15. Verfahren nach Anspruch 14, **dadurch gekennzeichnet, dass** die Entlüftungsroutine die Systemzustände B = aktiv (busy), S = gestoppt, P = pause, F = fehler, D = done (fertig) und ID = Idle unterscheidet, und dass die Systemzustände (B, S, P, F, D, ID) in dem Speicher protokolliert werden.

16. Verfahren nach Anspruch 14, **dadurch gekennzeichnet, dass** jede Interaktionsstufe (I) mittels Bestätigung (Befehl: continue) abgeschlossen wird, und dass nach Bestätigung automatisch in die Aktivitätsstufe (A) gewechselt wird.

17. Verfahren nach Anspruch 14 und 16, **dadurch gekennzeichnet, dass** die Schritte S1-Sn bis zum Abschluss der Entlüftungsroutine abgearbeitet werden.

18. Verfahren nach Anspruch 14 und 15, **dadurch gekennzeichnet, dass** die Entlüftungsroutine während jedem Schritt innerhalb der Interaktionsstufe (I) durch Abbruch (Kommando: abort) in gestoppten Systemzustand S (gestoppt) überführbar ist.

19. Verfahren nach einem der vorhergehenden Ansprüche 14 bis 18, **dadurch gekennzeichnet, dass** eine automatische Überwachungsroutine während der Entlüftungsroutine aktiv ist, die zur Fehlerüberwachung dient, und dass in einem Fehlerfall automatisch in den Systemzustand F (Fehler) gewechselt wird.

20. Verfahren nach Anspruch 19, **dadurch gekennzeichnet, dass** in Abhängigkeit von der Fehlerschwere ein vollständiger Abbruch (Abort) der gesamten Entlüftungsroutine oder nur ein Abbruch des aktuelle durchgeführten Schrittes (S) der Entlüftungsroutine in Verbindung mit der Rückführung zu der letzten Interaktionsstufe (I) vorgeschlagen wird, wobei jeder Abbruch zu bestätigen ist.

21. Elektronischer Regler mit einem Programmcode zur Durchführung des Verfahrens nach Anspruch 1 und 8, **dadurch gekennzeichnet, dass** der Speicher des elektronischen Reglers als EEPROM ausgebildet ist.

22. Elektronischer Regler mit einem Programmcode zur Durchführung des Verfahrens nach Anspruch 1, **dadurch gekennzeichnet, dass** der elektronische Regler eine Schnittstelle für ein externes Diagnosegerät aufweist, und dass die Einwahlroutine mit Hilfe des externen Diagnosegerätes außer Funktion setzbar ist.

## Claims

1. Method of filling and bleeding an electronically controllable brake system, comprising an electronic controller for actuating electrohydraulic components of the brake system, wherein hydraulic components such as hydraulic unit, valves, return pump, master brake cylinder, conduits of pipes or hoses are mounted during the assembly of a motor vehicle for providing a brake system and can be filled with pressure fluid in such a fashion that any possibly remaining air bubbles in the interior of the hydraulic components are substantially eliminated, wherein the method includes filling sequences according to a predetermined filling profile, wherein on-board sensory means for detecting a brake system pressure are used to identify a superimposed pressure time course, and wherein the electrohydraulic components of the brake system are actuated by the electronic controller, if required, in conformity with the identified filling profile, and the access to the method is secured by an enter routine with the aid of a predetermined code in order to prevent the facts of misuse.

2. Method as claimed in claim 1,
**characterized in that** the brake system detects independently, i.e. automatically, the basic steps of the filling profile and/or the start of the filling operation in such a fashion that detection of the filling profile or predefining determined settings for the hydraulic components does not require electric connecting lines or other corresponding electric interfaces between the brake system and the filling automaton.

3. Method as claimed in claim 2,
**characterized in that** the detection of the filling profile or the start of the filling operation is performed by means of at least one pressure sensor provided in the brake system, and a pressure sensor is especially fitted in the area of the master cylinder.

4. Method as claimed in claim 1,
**characterized in that** preceding the actual operating phase of the controller for the regular brake operation is an identifying phase for identifying a filling operation, which is activated with the first activation of the brake system.

5. Method as claimed in claim 4,
**characterized in that** the identifying phase monitors a first pressure detection threshold, and the filling operation starts exactly when the pressure drops below the first pressure detection threshold.

6. Method as claimed in claim 5,
**characterized by** at least two, in particular three, pressure detection thresholds.

7. Method as claimed in claim 1,
**characterized in that** data and information related to filling and bleeding such as the official filling status of the assembly in particular, and information about successfully completed and/or unsuccessfully discontinued bleeding routines of the assembly without access to an external diagnosis or control unit are stored in a memory of the controller.

8. Method as claimed in claim 1,
**characterized in that** a program code for the execution of the enter routine is stored in the memory of the controller, and **in that** the enter routine is secured by means of a predetermined code.

9. Method as claimed in claim 1,
**characterized in that** the predetermined code is stored in the memory of the electronic controller, that the enter routine comprises an identification by input of a code, and with the electronic controller determining consistency or discrepancy between the code input and the stored code so that the bleeding routine is released exclusively in the event of code consistency.

10. Method as claimed in claim 8 or 9,
**characterized in that** the code can be input by means of a predetermined actuation pattern such as especially the number of actuations, actuating frequency, or actuating speed of man-machine interfaces of the motor vehicle.

11. Method as claimed in claim 10,
**characterized in that** absolutely necessary man-machine interfaces such as in particular key buttons, switches, levers or sensors for the actuation of vehicle components in addition to the main actuating function still have a double function for the input of the code.

12. Method as claimed in claims 1 and/or 7,
**characterized in that** the course and/or the result of the enter routine is stored in the memory of the electronic controller.

13. Method as claimed in claim 12,
**characterized in that** data about the course and the result of the bleeding routine is stored in the memory of the electronic controller, while successfully or unsuccessfully completed process steps are recorded.

14. Method as claimed in any one or more of the preceding claims,
**characterized in that** the bleeding routine is subdivided into several temporally subsequent steps S1-Sn, and defined system states (B, S, P, F, D, ID) are provided to execute the individual steps S1-Sn, and each step (S1-Sn) includes each one interaction stage (I) - in particular for the operator-controlled selection, data input, or any other activity - and each one activity stage (A) for the execution of internal processes.

15. Method as claimed in claim 14,
**characterized in that** the bleeding routine makes a distinction between the system states B = busy, S = stopped, P = pause, F = error, D = done, and ID = idle, and that the system states (B, S, P, F, D, ID) are recorded in the memory.

16. Method as claimed in claim 14,
**characterized in that** each interaction stage (I) is completed by means of a confirmation (command: continue), and that there is an automatic change into the activity stage (A) after confirmation.

17. Method as claimed in claims 14 and 16,
**characterized in that** the steps S1-Sn are executed until completion of the bleeding routine.

18. Method as claimed in claims 14 and 15,
**characterized in that** the bleeding routine can be transferred into the stopped system state S (stopped) during each step within the interaction stage (I) by abortion (command: abort).

19. Method as claimed in any one of the preceding claims 14 to 18,
**characterized in that** an automatic monitoring routine is active during the bleeding routine, which is used for error monitoring, and that in a case of error there is an automatic change into the system state F (error).

20. Method as claimed in claim 19,
**characterized in that** depending on the seriousness of an error, a complete abortion (abort) of the entire bleeding routine or only abortion of the currently executed step (S) of the bleeding routine in connection with the return to the last interaction stage (I) is suggested, and each abortion must be confirmed.

21. Electronic controller with a program code for implementing the method as claimed in claims 1 and 8,
**characterized in that** the memory of the electronic controller is designed as an EEPROM.

22. Electronic controller with a program code for implementing the method as claimed in claim 1,
**characterized in that** the electronic controller includes an interface for an external diagnosis unit, and **in that** the enter routine can be disabled using the external diagnosis unit.

## Revendications

1. Procédé pour remplir et purger l'air d'un système de freinage à régulation électronique, comprenant un régulateur électronique pour commander des composants électrohydrauliques du système de freinage, dans lequel des composants hydrauliques tels qu'une unité hydraulique, des soupapes, une pompe de refoulement, un cylindre principal de frein, des conduites tubulaires ou des tuyaux sont intégrés, lors du montage d'un véhicule automobile, pour former un système de freinage, et peuvent être remplis avec un fluide sous pression de manière que d'éventuelles bulles d'air résiduelles soient éliminées pour l'essentiel à l'intérieur des composants hydrauliques, le procédé présentant des séquences de remplissage selon un profil de remplissage prédéfini, dans lequel, à l'aide de moyens de détection de bord, pour détecter une pression du système de freinage, une variation marquée de la pression dans le temps est reconnue, et dans lequel les composants hydrauliques du système de freinage sont commandés au besoin par le régulateur électronique conformément au profil de remplissage reconnu, et
l'accès au procédé est protégé à l'aide d'un code prédéterminé, pour éviter des mauvaises utilisations par une routine de sélection.

2. Procédé selon la revendication 1, **caractérisé en ce que** le système de freinage reconnaît de manière autonome, c'est-à-dire automatiquement, les étapes essentielles du profil de remplissage et/ou le début du remplissage de manière que, pour reconnaître le profil de remplissage ou pour prédéfinir des réglages déterminés des composants hydrauliques, aucune ligne de liaison électrique ou autres interfaces électriques correspondantes ne soient nécessaires entre le système de freinage et l'automate de remplissage.

3. Procédé selon la revendication 2, **caractérisé en ce que** la reconnaissance du profil de remplissage ou le début du remplissage est exécutée au moyen d'au moins un capteur de pression prévu dans le système de freinage, un capteur de pression étant inséré en particulier dans la zone du cylindre principal.

4. Procédé selon la revendication 1, **caractérisé en ce qu'**en amont de la phase de fonctionnement proprement dite du régulateur pour le fonctionnement régulier du frein est couplée une phase de reconnaissance pour reconnaître un processus de remplissage, laquelle phase est activée lors de la première mise en marche du système de freinage.

5. Procédé selon la revendication 4, **caractérisé en ce que** la phase de reconnaissance surveille un premier seuil de reconnaissance de pression et la phase de remplissage commence exactement lorsque la pression sous-dépasse le premier seuil de reconnaissance de pression.

6. Procédé selon la revendication 5, **caractérisé par** au moins deux, en particulier trois seuils de reconnaissance de pression.

7. Procédé selon la revendication 1, **caractérisé en ce que** des données et des informations significatives du remplissage et de la purge d'air, telles qu'en particulier l'état de remplissage officiel du groupe, et des informations relatives à des routines de purge d'air du groupe, conclues avec succès et/ou interrompues sans succès, sont enregistrées dans une mémoire du régulateur électronique, sans accès à un appareil externe de diagnostic ou de commande.

8. Procédé selon la revendication 1, **caractérisé en ce qu'**un code de programme est enregistré dans la mémoire du régulateur électronique, pour le traitement de la routine de sélection, et **en ce que** la routine de sélection est protégée à l'aide d'un code prédéterminé.

9. Procédé selon la revendication 1, **caractérisé en ce que** le code prédéterminé est enregistré dans la mémoire du régulateur électronique, **en ce que** la routine de sélection comprend une identification par saisie d'un code, et dans lequel le régulateur électronique constate une coïncidence ou un écart entre le code saisi et le code enregistré, de sorte que la routine de purge d'air est autorisée exclusivement en cas de coïncidence des codes.

10. Procédé selon la revendication 8 ou 9, **caractérisé en ce que** le code peut être saisi au moyen d'un schéma d'actionnement prédéterminé, tel qu'en particulier un nombre d'actionnement, une fréquence d'actionnement ou une vitesse d'actionnement d'interfaces homme-machine du véhicule automobile.

11. Procédé selon la revendication 10, **caractérisé en ce que** des interfaces homme-machine, forcément nécessaires, telles qu'en particulier des touches, des interrupteurs, des leviers ou des capteurs pour l'actionnement de composants du véhicule, présentent, outre la fonction d'actionnement principale, encore une double fonction pour la saisie du code.

12. Procédé selon la revendication 1 et/ou 7, **caractérisé en ce que** l'allure et/ou le résultat de la routine de sélection est enregistré dans la mémoire du régulateur électronique.

13. Procédé selon la revendication 12, **caractérisé en ce que** des données relatives à l'allure et au résultat de la routine de purge d'air sont enregistrées, avec les protocoles des étapes de procédé conclues avec succès ou sans succès, dans la mémoire du régulateur électronique.

14. Procédé selon une ou plusieurs des revendications précédentes, **caractérisé en ce que** la routine de purge d'air est décomposée en plusieurs étapes (S1-Sn) se succédant dans le temps, des états de système (B, S, P, F, D, ID) définis sont prévus pour le traitement des différentes étapes (S1-Sn), et chaque étape (S1-Sn) présente un étage d'interaction (I) - en particulier pour la sélection guidée par l'opérateur, la saisie de données ou une autre activité - ainsi qu'un étage d'activité (A) pour traiter les processus internes.

15. Procédé selon la revendication 14, **caractérisé en ce que** la routine de purge d'air distingue les états de système B = actif (busy), S = stoppé, P = pause, F = défaut, D = done (fini) et ID = Idle, et **en ce que** les états de système (B,S,P,F,D,ID) font l'objet de protocoles dans la mémoire.

16. Procédé selon la revendication 14, **caractérisé en ce que** chaque étage d'interaction (I) est conclu par confirmation (instruction : continuer), et **en ce qu'**après confirmation on passe automatiquement à l'étage d'activité (A).

17. Procédé selon les revendications 14 et 16, **caractérisé en ce que** les étapes (S1-Sn) sont traitées jusqu'à conclusion de la routine de purge d'air.

18. Procédé selon les revendications 14 et 15, **caractérisé en ce que** la routine de purge d'air peut passer, pendant chaque étape à l'intérieur de l'étage d'interaction (I), par interruption (commande : quitter) à l'état stoppé du système (S) (stoppé).

19. Procédé selon l'une quelconque des revendications 14 à 18 précédentes, **caractérisé en ce qu'**une routine de surveillance automatique est active pendant la routine de purge d'air, qui sert au contrôle de défaut et **en ce qu'**en cas de défaut on passe automatiquement à l'état de système (F) (défaut).

20. Procédé selon la revendication 18, **caractérisé en ce qu'**en fonction de la gravité du défaut il est proposé une interruption totale (quitter) de l'ensemble de la routine de purge d'air ou seulement une interruption de l'étape actuelle en cours (S) de la routine de purge d'air, en combinaison avec le retour au dernier étage d'interaction (I), chaque interruption devant être confirmée.

21. Régulateur électronique avec un code de programme pour la mise en oeuvre du procédé selon les revendications 1 et 8, **caractérisé en ce que** la mémoire du régulateur électronique est réalisée sous la forme d'une mémoire EEPROM.

22. Régulateur électronique avec un code de programme pour la mise en oeuvre du procédé selon la revendication 1, **caractérisé en ce que** le régulateur électronique comporte une interface pour un appareil externe de diagnostic, et **en ce que** la routine de sélection peut être désactivée à l'aide de l'appareil externe de diagnostic.
